# FASCICULE DE BREVET EUROPEEN

(11) **EP 2 379 237 B1**
(45) Date de publication et mention de la délivrance du brevet: **28.11.2012**
(21) Numéro de dépôt: 09804192.4
(22) Date de dépôt: 21.12.2009
(51) Int. Cl.: B08B 7/00, B08B 15/04, B23K 26/14, B23K 9/32, B08B 17/06

(54) **AVALOIR D'ASPIRATION DE PARTICULES FINES ET DISPOSITIF D'ABLATION LASER D'UNE COUCHE SUPERFICIELLE D'UNE PAROI COMPRENANT UN TEL AVALOIR**
HAUBE ZUM ABSAUGEN VON FEINTEILCHEN UND FÜR DIE LASERABLATION EINER OBERFLÄCHENSCHICHT EINER WAND BESTIMMTE UND SOLCH EINE HAUBE ENTHALTENDE VORRICHTUNG
HOOD FOR SUCKING-UP FINE PARTICLES, AND A DEVICE INTENDED FOR THE LASER ABLATION OF A SURFACE LAYER OF A WALL AND INCLUDING SUCH A HOOD

(30) Priorité: 23.12.2008 FR 0859052
(43) Date de publication de la demande: 26.10.2011
(73) Titulaire: Commissariat à l'Énergie Atomique et aux Énergies Alternatives, 75015 Paris (FR)
(72) Inventeur: CHAMPONNOIS, François, F-91440 Bures Sur Yvette (FR); LECOFFRE, Yves, F-38700 La Tronche (FR)
(74) Mandataire: Callon de Lamarck, Jean-Robert
(86) Numéro de dépôt international: PCT/EP2009/067655
(87) Numéro de publication internationale: WO 2010/072720

(56) Documents cités:
- EP-A1- 0 823 292
- US-A1- 2003 197 909

## Description

### DOMAINE TECHNIQUE GENERAL

L'invention concerne un avaloir d'aspiration de particules fines, notamment utilisé dans un dispositif pour l'ablation laser d'une couche superficielle d'une paroi telle qu'un revêtement mural de peinture, par exemple dans une installation nucléaire.

### ETAT DE LA TECHNIQUE

La décontamination et l'assainissement des installations nucléaires devenues obsolètes ou ayant atteint leur limite d'âge sont devenus une priorité pour l'industrie nucléaire. On s'efforce de nettoyer les parties contaminées de ces installations, en évitant de produire des déchets également contaminés et en tâchant de minimiser les effluents de nettoyage.

Une solution connue pour effectuer la décontamination d'installations nucléaires consiste à utiliser l'ablation laser.

Le document EP-0 823 292 A décrit un avaloir d'aspiration de particules fines selon le préambule de la revendication 1.

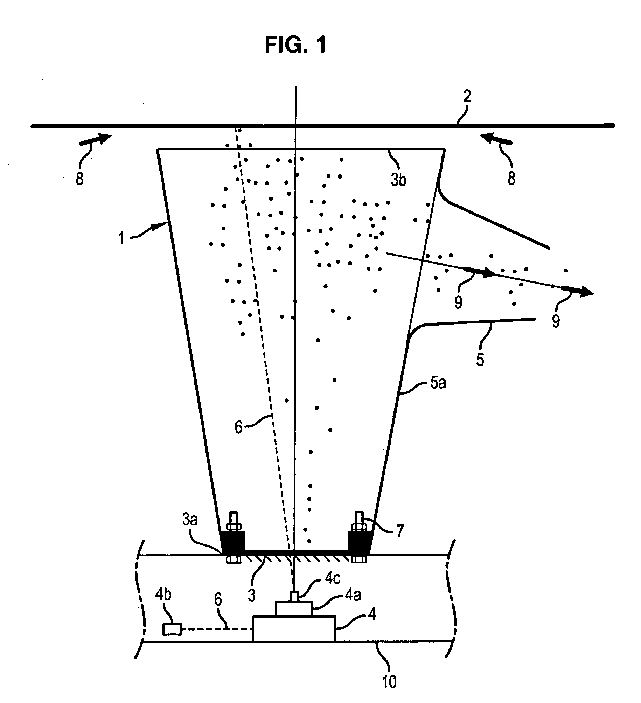

Le document FR 2 887 161 décrit un dispositif d'ablation laser pour ablater une couche de peinture murale à décontaminer, par exemple dans une installation nucléaire. On a représenté sur la figure 1 un tel dispositif.

Un tel dispositif comprend un bâti 10 sur lequel est montée au moins une source laser 4b, un déflecteur 4 optique monté en aval de la source laser 4b pour recevoir les faisceaux laser 6. Le déflecteur 4 optique comporte à sa sortie une tête 4a de déflection comprenant une lentille de focalisation 4c pour focaliser les faisceaux laser 6 sur une couche 2 à ablater.

L'ablation laser consiste à retirer une couche d'épaisseur réduite du matériau contaminant à enlever, via l'interaction des faisceaux laser pulsés focalisés issue de la source laser 4b avec ce matériau. Lors de l'impact du laser, le matériau se délite et il se crée des particules de dimensions très variées, les plus fines ayant une dimension caractéristique très inférieure au micron. Il se crée également des particules beaucoup plus grosses pouvant atteindre quelques centaines de microns.

Les particules étant contaminées, afin d'éviter qu'elles ne se propagent dans l'atmosphère on prévoit un avaloir 1 comprenant :
- une embouchure 3b que l'on applique à proximité de la paroi 2 ;
- une base 3a en regard de l'embouchure 3b ;
- une partie intermédiaire 5a convergente entre l'embouchure 3b et la base 3a ; et
- une sortie d'aspiration 5 disposée sur la partie intermédiaire 5a de l'avaloir 1 pour aspirer les particules.

L'avaloir 1 est appliqué à proximité de la paroi 2 comme illustré sur la figure 1 et aspire l'air atmosphérique extérieur 8. Cet air 8, après être entré dans l'avaloir, se charge en particules produites par le laser et cet air 9, chargé en particules, est évacué au travers de la sortie d'aspiration 5a.

Par ailleurs, afin d'éviter que des particules ne se déposent sur le déflecteur optique ou la lentille de focalisation, on prévoit un hublot 3 qui est disposé sur la base 3a et qui est fixé par exemple au moyen de vis 7. Un tel hublot 3 est traité en surface pour laisser passer un faisceau laser 6 avec le moins de pertes possible.

Toutefois, un problème est que des particules peuvent se déposer sur le hublot et empêcher une transmission correcte du faisceau laser nécessaire à l'ablation.

Ces particules peuvent, en outre, au contact du faisceau laser, dégrader le traitement de surface du hublot.

### PRESENTATION DE L'INVENTION

L'invention permet d'éviter que des particules ne se déposent sur le hublot.

Ainsi, selon un premier aspect, l'invention concerne un avaloir d'aspiration de particules fines selon la revendication 1.

L'avaloir de l'invention pourra en outre présenter facultativement au moins l'une des caractéristiques suivantes :
- il comprend un convergent, disposé au niveau de l'entrée d'air, apte à faire pénétrer l'air dans l'avaloir tangentiellement au hublot puis à le faire s'écouler dans l'avaloir à partir du hublot vers l'embouchure selon une direction perpendiculaire au hublot ;
- le convergent comporte une paroi avec une section en forme de «S»;
- les entrées d'air sont des ouvertures longitudinales et/ou circulaires
- la partie intermédiaire entre l'embouchure et la base est convergente.

Et selon un second aspect, l'invention concerne un dispositif d'ablation laser d'une couche superficielle d'une paroi selon la revendicatin 7 comprenant un avaloir d'aspiration de particules fines selon la revendication 1.

### PRESENTATION DES FIGURES

D'autres caractéristiques et avantages de l'invention ressortiront encore de la description qui suit, laquelle est purement illustrative et non limitative, et doit être lue en regard des figures annexées sur lesquelles, outre la figure 1 déjà discutée :
- la figure 2 illustre une vue détaillée de la base d'un avaloir;
- les figures 3a et 3b illustrent deux implémentations possibles d'un convergent dans un avaloir;
- les figures 4a et 4b illustrent la mise en place d'un volet mobile dans l'avaloir selon l'invention ; et
- la figure 5 illustre un profil d'écoulement d'air dans un avaloir.

### DESCRIPTION DETAILLEE

Un avaloir d'aspiration de particules fines comprend, comme représenté sur la figure 1,
- une embouchure 3b destinée à être disposée à proximité d'une paroi 2 ;
- une base 3a comportant un hublot 3 apte à laisser passer un faisceau laser 6 ;
- une partie intermédiaire 5a convergente entre l'embouchure 3b et la base 3a ;
- une sortie d'aspiration 5 disposée sur la partie intermédiaire 5a de l'avaloir 1 destinée à aspirer les particules fines.

L'avaloir 1 est avantageusement, mais non limitativement, utilisé dans un dispositif d'ablation laser d'une couche superficielle de la paroi telle que présentée sur la figure 1.

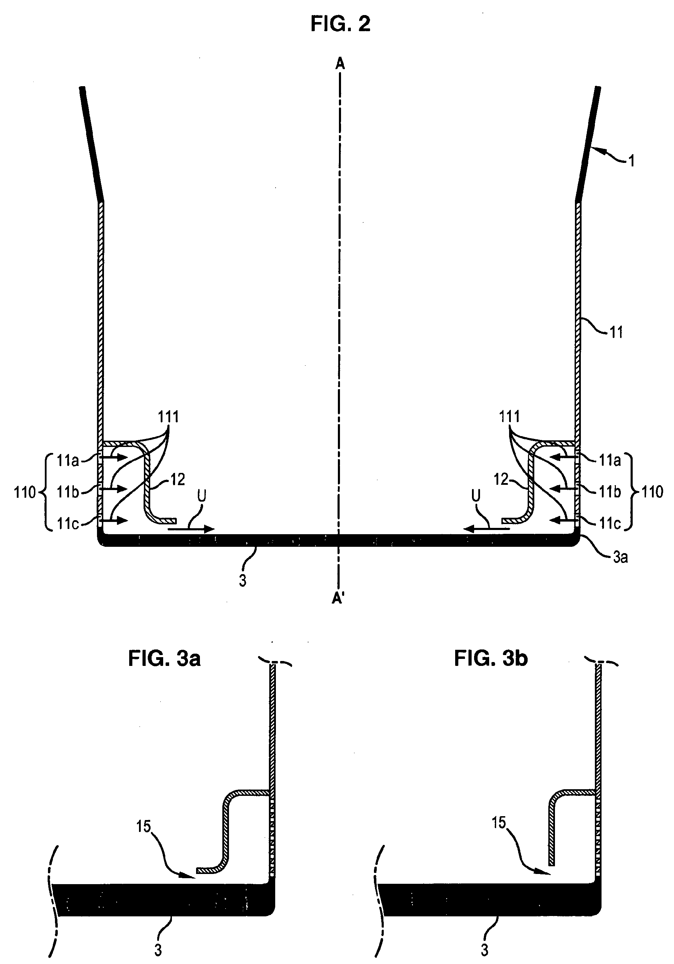

On a illustré sur la figure 2 une vue détaillée de la base 3a de l'avaloir 1 d'aspiration de particules fines.

La base 3a comporte au moins une entrée 110 d'air, de sorte qu'en fonctionnement, et lors de l'aspiration effectuée par la sortie d'aspiration 5, il se crée un courant d'air au niveau de la base 3a, le courant d'air allant de l'entrée 110 vers la sortie 5. Ce courant d'air empêche au maximum le dépôt de particules fines sur le hublot 3, puisque les particules fines issues de l'ablation sont entraînées par le courant d'air.

L'avaloir 1 comporte de préférence plusieurs entrées 110 d'air qui sont disposées sur tout le pourtour de la base 3a de l'avaloir 1, afin d'améliorer encore l'efficacité de l'avaloir et d'assurer que le maximum de particules sorte de l'avaloir par la sortie d'aspiration 5.

Ces entrées d'air 110 sont par exemple des ouvertures 11 a, 11 b, et 11 c longitudinales et/ou circulaires, de faible dimension ou de faible diamètre (par exemple de l'ordre de 2 mm), pour limiter l'entrée dans l'avaloir de poussières externes par exemple (voir figure 2 par exemple).

Afin de nettoyer le hublot 3 au cas où au moins une particule se serait quand même déposée sur le hublot ou afin de créer un rideau d'air qui puisse couvrir tout le hublot 3 pour empêcher encore plus un tel dépôt, l'avaloir 1 comprend en outre un convergent 12 disposé au niveau des entrées d'air 110, sur le pourtour interne de la base 3a. Le convergent 12 s'étend de la partie intermédiaire 5a vers le hublot 3, en formant une sortie 15 d'air interne et périphérique vers le hublot 3. La sortie 15 a par exemple une hauteur de l'ordre de 5 mm.

Ce convergent 12 peut avoir une section en forme de « S » (figure 3a), mais d'autres formes sont possibles, comme par exemple une paroi disposée perpendiculairement (figure 3b) ou obliquement au hublot 3.

On a représenté sur les figures 3a et 3b la disposition du convergent 12 au niveau des entrées d'air 110.

Le convergent 12 forme avec les entrées 110, et en amont de la sortie 15, une chambre de tranquillisation où la vitesse de l'air est faible. Grâce au convergent 12, l'air pénètre par les ouvertures 11 a, 11 b, 11 c, qui peuvent être nombreuses afin de maximiser l'entrée d'air, et l'écoulement d'air est homogénéisé dans la chambre de tranquillisation.

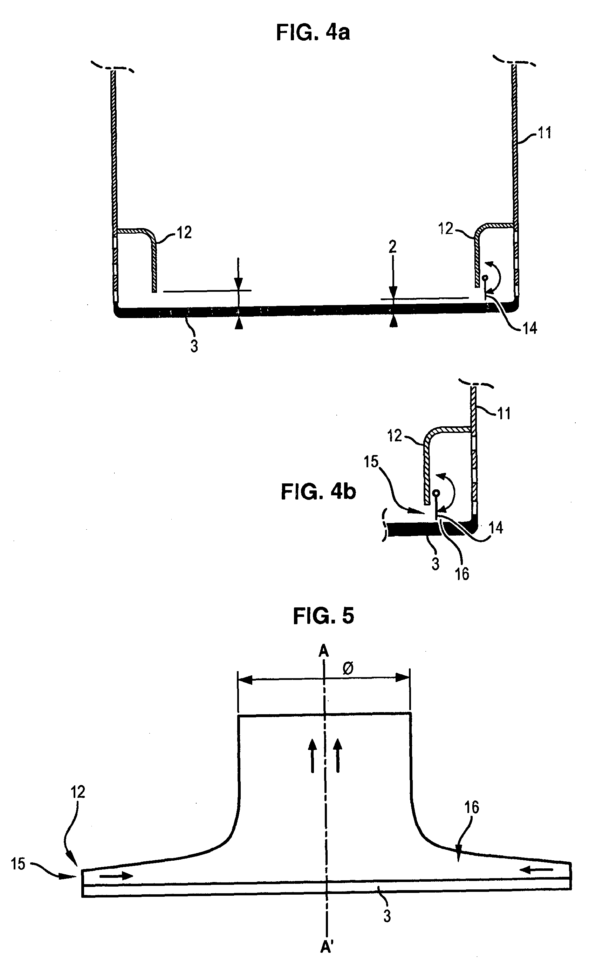

De par l'aspiration par la sortie 5, l'écoulement d'air, une fois homogénéisé, est accéléré au niveau de la sortie 15 entre le hublot 3 et le convergent 12, pour former, grâce à un écoulement d'air centripète, un rideau 16 d'air couvrant ainsi tout le hublot 3 (comme le montre la figure 5).

Compte tenu de la disposition du convergent 12 et de la sortie 15, l'écoulement d'air est tangentiel au hublot 3 au niveau de la sortie 15 périphérique, et normal au hublot 3 en son centre. L'écoulement de l'air au niveau du hublot 3 est ainsi quasi axisymétrique, comme on l'a représenté sur la figure 5.

L'écoulement d'air selon ce profil permet de repousser une quelconque particule pénétrant dans l'avaloir 1 par l'embouchure 3b, en la repoussant vers la sortie d'aspiration 5.

En effet, toute particule fine tombant dans l'écoulement d'air tangentiel centripète de la figure 5 n'a pas le temps de se déposer sur le hublot 3, et elle est forcée de passer dans l'écoulement normal au hublot 3, dont le débit est évacué au niveau de la sortie 5.

Toute particule située dans l'écoulement normal est repoussée par l'écoulement.

Afin de préciser quelques ordres de grandeur, on peut donner à la sortie 15 une épaisseur de 5 mm, selon un carré de 150 mm de côté.

Si la vitesse de l'air dans la section de la sortie 15 est de 4 m/s, le débit d'air passant dans la sortie 15 est de 12 L/s.

Le diamètre φ de l'écoulement normal est de 62 mm environ.

Le temps de séjour moyen de l'air dans l'écoulement tangentiel centripète d'air est de 0,01125 seconde. Un tel écoulement centripète empêche le dépôt d'une particule dont la vitesse de chute est de 0,4 m/s, ce qui correspond à des particules sphériques dont la masse volumique est de 2000 kg/m³ et le diamètre de 80 micromètres.

Il est à noter qu'afin de prendre en compte un point de l'écoulement (situé dans l'axe AA' de l'avaloir 1 visible aux figures 2 et 5), point où la vitesse de l'écoulement de l'air est nulle (il n'est donc pas possible de nettoyer une particule placée en ce point sur le hublot), un volet 14, mobile entre une position ouverte et une position fermée, est disposé au niveau d'une partie des entrées 110 d'air de l'avaloir 1 (voir les figures 4a et 4b).

De manière plus précise, le volet 14 est disposé de manière à obturer ou à limiter au moins partiellement les entrées d'air 11 a, 11 b, 11 c, via la sortie 15, par exemple de manière intermittente, pour détruire, au moins temporairement, le caractère axisymétrique de l'écoulement. Ainsi, l'écoulement n'a plus une vitesse nulle au niveau du point. Ainsi, dans le cas où une particule viendrait au niveau de ce point cette dernière sera repoussée vers la sortie 5 de l'avaloir 1.

L'ouverture et la fermeture du volet 14 pourront se faire au moyen d'un petit moteur.

Avantageusement, le volet 14 n'est pas totalement étanche, pour maintenir un écoulement à son niveau et éviter le dépôt de particules sur le hublot 3. Ainsi, on laisse un jeu 16 de quelques millimètres, par exemple 2 mm même lorsque le volet est en position fermée.

En conséquence, outre le fait que les particules sont repoussées loin du hublot 3, il est possible de nettoyer le hublot 3 au point de manière intermittente.

Ainsi, on s'assure de n'avoir aucune particule sur le hublot sans avoir à utiliser un dispositif supplémentaire qui devrait être disposé sur le trajet du faisceau laser.

## Revendications

1. Avaloir d'aspiration de particules fines comprenant
- une embouchure (3b) destinée à être disposée à proximité d'une paroi (2) ;
- une base (3a) comportant un hublot (3) apte à laisser passer un faisceau laser (6) ;
- une partie intermédiaire (5a) entre l'embouchure (3b) et la base (3a) ;
- une sortie d'aspiration (5) disposée sur la partie intermédiaire (5a) de l'avaloir (1) destinée à aspirer les particules fines ;
- une pluralité d'entrées (110) d'air disposée au niveau de la base (3a), apte à créer, en fonctionnement, un courant d'air au niveau de la base (3a) de l'avaloir (1) empêchant le dépôt de particules fines sur le hublot (3) ;
l'avaloir est **caractérisé en ce qu'**il comprend un volet (14) mobile destiné à obturer au moins partiellement certaines entrées d'air.

2. Avaloir selon la revendication 1, comprenant un convergent (12), disposé au niveau de l'entrée (110) d'air, apte à faire pénétrer l'air dans l'avaloir tangentiellement au hublot (3) puis à le faire s'écouler dans l'avaloir (1) à partir du hublot (3) vers l'embouchure (3b) selon une direction perpendiculaire au hublot (3).

3. Avaloir selon la revendication 2, dans lequel le convergent (12) comporte une paroi avec une section en forme de « S ».

4. Avaloir selon l'une des revendications 1 à 3, comportant plusieurs entrées (110) d'air disposées sur un pourtour de la base (3a) de l'avaloir.

5. Avaloir selon l'une des revendications 1 à 4, dans lequel les entrées d'air (110) sont des ouvertures longitudinales et/ou circulaires.

6. Avaloir selon l'une des revendications précédentes dans lequel la partie intermédiaire (5a) entre l'embouchure (3b) et la base (3a) est convergente.

7. Dispositif d'ablation laser d'une couche superficielle d'une paroi comprenant au moins une source laser d'ablation, **caractérisé en ce qu'**il comprend un avaloir d'aspiration de particules fines selon l'une des revendications précédentes.

## Claims

1. A suction hood for fine particles including
- a mouth (3b) designed to be set near a wall (2);
- a base (3a) including a window (3) capable of allowing passage of a laser beam (6) ;
- an intermediate part (5a) between the mouth (3b) and the base (3a) ;
- a suction outlet (5) located on the intermediate part (5a) of the hood (1) designed to suck away the fine particles;
- a plurality of air inlets (110) located at the base (3a), capable of creating, in operation, an air current at the base (3a) of the hood (1) preventing the deposition of fine particles on the window (3);
the hood is **characterized in that** it includes a movable flap (14) designed to block or at least partially restrict certain air inlets.

2. A hood according to Claim 1, including a convergent nozzle (12), located at the air inlet (110) capable of making the air enter the hood tangent to the window (3) then make it flow within the hood (1) from the window (3) toward the mouth (3b) in a direction perpendicular to the window (3).

3. A hood according to Claim 2, in which the convergent nozzle (12) includes a wall with an "S" shaped section.

4. A hood according to one of Claims 1 through 3, including several air inlets (110) located on a perimeter of the base (3a) of the hood.

5. A hood according to one of Claims 1 through 4, in which the air inlets (110) are longitudinal and/or circular openings.

6. A hood according to one of the foregoing claims, in which an intermediate part (5a) between the mouth (3b) and the base (3a) is convergent.

7. A device for laser ablation of a superficial layer of a wall including at least one ablation laser source, **characterized in that** in includes a hood for sucking away fine particles according to one of the foregoing claims.

## Patentansprüche

1. Haube zum Absaugen von Feinteilchen, umfassend
- eine Mündung (3b), die zur Anordnung in der Nähe einer Wand (2) bestimmt ist;
- eine Basis (3a), die eine Öffnung (3) aufweist, die für den Durchlass eines Laserstrahls (6) geeignet ist;
- einen Zwischenteil (5a) zwischen der Mündung (3b) und der Basis (3a);
- einen Absaugauslass (5), der an dem Zwischenteil (5a) der Haube (1) angeordnet ist und der für das Absaugen der Feinteilchen bestimmt ist,
- eine Vielzahl von Lufteinlässen (110), die im Bereich der Basis (3a) angeordnet sind und die dafür geeignet sind, im Betrieb einen Luftstrom im Bereich der Basis (3a) der Haube (1) zu erzeugen, der die Ablagerung von Feinteilchen an der Öffnung (3) verhindert;
wobei die Haube **dadurch gekennzeichnet ist, dass** sie eine bewegliche Klappe (14) umfasst, die dafür bestimmt ist, zumindest teilweise bestimmte Lufteinlässe zu verschließen.

2. Haube nach Anspruch 1, umfassend einen Luftleiter (12), der im Bereich des Lufteinlasses (110) angeordnet ist und der dafür geeignet ist, die Luft in die Haube in tangentialer Richtung zu der Öffnung (3) eintreten zu lassen und sie anschließend in der Haube (1) von der Öffnung (3) in Richtung der Mündung (3b) in einer zu der Öffnung (3) senkrechten Richtung strömen zu lassen.

3. Haube nach Anspruch 2, wobei der Luftleiter (12) eine Wand mit einem S-förmigen Querschnitt aufweist.

4. Haube nach einem der Ansprüche 1 bis 3, umfassend mehrere Lufteinlässe (110), die an einem äußeren Umfang der Basis (3a) der Haube angeordnet sind.

5. Haube nach einem der Ansprüche 1 bis 4, wobei die Lufteinlässe (110) längliche und/oder kreisförmige Öffnungen sind.

6. Haube nach einem der vorhergehenden Ansprüche, wobei das Zwischenteil (5a) zwischen der Mündung (3b) und der Basis (3a) konvergent ist.

7. Vorrichtung zur Laserablation einer Oberflächenschicht einer Wand, die mindestens eine Laserablations-Quelle umfasst, **dadurch gekennzeichnet, dass** sie eine Haube zum Absaugen von Feinteilchen nach einem der vorhergehenden Ansprüche umfasst.
